# EUROPEAN PATENT SPECIFICATION

(11) **EP 2 986 020 B1**
(45) Date of publication and mention of the grant of the patent: **10.10.2018**
(21) Application number: 15181271.6
(22) Date of filing: 17.08.2015
(51) Int. Cl.: H04N 21/6375, H04N 21/2662, H04N 21/6377, H04N 21/24, H04L 29/06, H04N 21/6583

(54) **METHOD AND APPARATUS FOR ADJUSTING VIDEO QUALITY BASED ON NETWORK ENVIRONMENT**
VERFAHREN UND VORRICHTUNG ZUR EINSTELLUNG DER VIDEOQUALITÄT BASIEREND AUF DER NETZWERKUMGEBUNG
PROCÉDÉ ET APPAREIL DE RÉGLAGE DE QUALITÉ VIDÉO BASÉ SUR UN ENVIRONNEMENT DE RÉSEAU

(30) Priority: 15.08.2014 CN 201410404533
(43) Date of publication of application: 17.02.2016
(73) Proprietor: Xiaomi Inc., Beijing 100085 (CN)
(72) Inventor: LI, Feiyun, 100085 Haidian District (CN); GAO, Ziguang, 100085 Haidian District (CN); ZHAO, Ming, 100085 Haidian District (CN)
(74) Representative: Sadler, Peter Frederick

(56) References cited:
- CN-A- 103 916 367
- GB-A- 2 469 281
- US-A1- 2010 172 335
- US-B1- 6 519 004
- US-B1- 7 969 997

## Description

### TECHNICAL FIELD

The present disclosure relates to the field of communication technologies, and more particularly, to a method and apparatus for adjusting video quality based on a network environment.

### BACKGROUND

With the development of technologies, smart cameras have been gradually applied to users' daily lives. Generally, a user installs a smart camera at home to enable the smart camera to send video images of the home in real time to a mobile terminal of the user, thereby ensuring property safety of the user.

At present, the smart camera can send collected video data to the mobile terminal of the user by using the User Datagram Protocol (UDP). Under circumstances of a seriously congested network environment, the number of lost UDP data packets is large. As a result, blurred screen or freezing image is present when the mobile terminal plays the video data sent by the smart camera. In addition, under circumstances of a poor network environment, the speed of transmitting video data by the smart camera to the mobile terminal is also reduced. As a result, long time freezing or failure to normally play is present when the mobile terminal plays the video data sent by the smart camera. Otherwise, under circumstances of a good network environment, sometimes the smart camera may originally transmit video data with higher bit rate to the mobile terminal. However, the smart camera cannot change a predefined bit rate, which not only wastes network bandwidth resources, but also fails to provide the video quality with high definition to the mobile terminal.

Therefore, the conventional smart camera cannot adjust the bit rate of the video data, and thus fails to better accommodate the current network environment.

CN103916367 relates to a method for the transmission of multimedia data wherein acquisition parameters of the multimedia data are modified based on a packed loss rate of the multimedia data. US6519004 describes a method using an adaptive motion compensated video compression algorithm for transmitting video information over a hostile communication channel. US2010/0172335 describes a data transmission apparatus utilizing different retransmission limits for different service types. US7969997 relates to packet-based delivery of video content over a peer-to-peer network using packet prioritisation. GB2469281 describes a method for asynchronous live video transmission using individual requests from a video client for single frames of video data according to a specified encoding parameter.

### SUMMARY

To overcome the problem present in the related technologies, the present disclosure provides a method and apparatus for adjusting video quality based on a network environment, such that a smart camera may adjust video quality parameter according to a current network environment, and thus a terminal can smoothly play a video.

According to a first aspect of embodiments of the present disclosure, a method for adjusting video quality based on a network environment is provided. The method includes:
receiving a target frame serial number of a lost video frame from a terminal, the target frame serial number being for uniquely distinguishing video frames from each other, and using time when the target frame serial number is received as a timestamp of the target frame serial number;
determining the number of target frame serial numbers corresponding to the timestamps within a predefined time period;
lowering a designated quality parameter according to a predefined configuration criterion when the number of target frame serial numbers is greater than a first threshold; or
increasing the designated quality parameter according to the predefined configuration criterion when the number of target frame serial numbers is less than a second threshold, the first threshold being greater than the second threshold.

Prior to the receiving a target frame serial number of a lost video frame from a terminal, the method further includes:
judging whether the video frame is a key frame;
when the video frame is the key frame, splitting the key frame into a plurality of split frames carrying data headers according to a predefined splitting criterion, the data header including a frame serial number of the key frame, a split frame serial number of the split frame, and the total number of the plurality of split frames; and sequentially sending the plurality of split frames carrying data headers to the terminal; and
when the video frame is not the key frame, sending the video frame carrying a frame serial number to the terminal.

The method further includes:
when the target frame serial number includes a frame serial number and a split frame serial number and the current number of retransmission times corresponding to the target frame serial number is less than a retransmission threshold, determining a video frame carrying the target frame serial number;
sending the video frame carrying the target frame serial number to the terminal, and progressively accumulating the current number of retransmission times by one; and
when the target frame serial number includes the frame serial number and the split frame serial number and the current number of retransmission times corresponding to the target frame serial number is not less than the retransmission threshold, performing the step of determining the number of target frame serial numbers corresponding to the timestamps within a predefined time period.

Optionally, the method further includes:
acquiring collected video data; compressing the video data into video frames carrying frame serial numbers by using a predefined video coding method according to a designated quality parameter; and
sending the video frames carrying frame serial numbers to the terminal.

In one part of the description, a method for adjusting video quality based on a network environment is described. The method includes:
receiving a video frame carrying a frame serial number from an image collecting device, the video frame carrying a frame serial number being formed by compressing video data by the image collecting device using a predefined video coding method according to a designated quality parameter;
judging, according to a predefined judgment criterion, whether a target frame serial number of a lost video frame exists; and
when it is determined, according to the predefined judgment criterion, that a target frame serial number of a lost video frame exists currently, sending the target frame serial number of the lost video frame to the image collecting device, such that the image collecting device uses time when the target frame serial number is received as a timestamp of the target frame serial number, and determines the number of target frame serial numbers corresponding to the timestamps within a predefined time period, to adjust the designated quality parameter.

Optionally, the step of judging, according to a predefined judgment criterion, whether a target frame serial number of a lost video frame exists includes:
when the received video frame is a non-split key frame or prediction frame, judging whether the frame serial number of the currently received video frame is contiguous to a frame serial number of a previously received video frame; and
when the frame serial number of the currently received video frame is non-contiguous to a frame serial number of a previously received video frame, determining a lost frame serial number as the target frame serial number according to the frame serial number of the currently received video frame and the frame serial number of the previously received video frame.

Optionally, the method further includes:
when the received video frame is a split frame split according to a key frame and carrying a data header, judging whether no another such split frame is received within a predefined time period; and
if no another such split frame is received within the predefined time period, determining a lost frame serial number as the target frame serial number according to a frame serial number, a split frame serial number and the total number of the split frames carried in the data header of the split frame.

According to another aspect of embodiments of the present disclosure, an apparatus for adjusting video quality based on a network environment is provided. The apparatus includes:
a receiving module, configured to receive a target frame serial number of a lost video frame from a terminal, the target frame serial number being for uniquely distinguishing video frames from each other, and use time when the target frame serial number is received as a timestamp of the target frame serial number;
a determining module, configured to determine the number of target frame serial numbers corresponding to the timestamps within a predefined time period; and
a quality adjusting module, configured to: lower a designated quality parameter according to a predefined configuration criterion when the number of target frame serial numbers is greater than a first threshold; or increase the designated quality parameter according to the predefined configuration criterion when the number of target frame serial numbers is less than a second threshold, the first threshold being greater than the second threshold.

The apparatus further includes:
a judging module, configured to determine whether the video frame is a key frame; and
an executing module, configured to: when the video frame is the key frame, split the key frame into a plurality of split frames carrying data headers according to a predefined splitting criterion, the data header including a frame serial number of the key frame, a split frame serial number of the split frame, and the total number of the plurality of split frames; and sequentially send the plurality of split frames carrying data headers to the terminal; and when the video frame is not the key frame, send the video frame carrying a frame serial number to the terminal.

The apparatus further includes:
a retransmission control module, configured to: when the target frame serial number includes a frame serial number and a split frame serial number and the current number of retransmission times corresponding to the target frame serial number is less than a retransmission threshold, determine a video frame carrying the target frame serial number, send the video frame carrying the target frame serial number to the terminal, and progressively accumulate the current number of retransmission times by one; and when the target frame serial number includes the frame serial number and the split frame serial number and the current number of retransmission times corresponding to the target frame serial number is not less than the retransmission threshold, execute the determining module.

Optionally, the apparatus further includes:
an acquiring module, configured to acquire collected video data;
a compressing module, configured to compress the video data into video frames carrying frame serial numbers by using a predefined video coding method according to a designated quality parameter; and
a sending module, configured to send the video frames carrying frame serial numbers to the terminal.

In one part of the description, an apparatus for adjusting video quality based on a network environment is described. The apparatus includes:
a receiving module, configured to receive a video frame carrying a frame serial number from an image collecting device, the video frame carrying a frame serial number being formed by compressing video data by the image collecting device using a predefined video coding method according to a designated quality parameter;
a judging module, configured to determine, according to a predefined judgment criterion, whether a target frame serial number of a lost video frame exists; and
an executing module, configured to: when it is determined, according to the predefined judgment criterion, that a target frame serial number of a lost video frame exists currently, send the target frame serial number of the lost video frame to the image collecting device, such that the image collecting device uses time when the target frame serial number is received as a timestamp of the target frame serial number, and determines the number of target frame serial numbers corresponding to the timestamps within a predefined time period, to adjust the designated quality parameter.

Optionally, the judging module includes:
a first judging submodule, configured to: when the received video frame is a non-split key frame or prediction frame, determine whether the frame serial number of the currently received video frame is contiguous to a frame serial number of a previously received video frame; and
a first executing submodule, configured to: when the frame serial number of the currently received video frame is non-contiguous to a frame serial number of a previously received video frame, determine a lost frame serial number as the target frame serial number according to the frame serial number of the currently received video frame and the frame serial number of the previously received video frame.

Optionally, the judging module includes:
a second judging submodule, configured to: when the received video frame is a split frame split according to a key frame and carrying a data header, determine whether no another such split frame is received within a predefined time period; and
a second executing submodule, configured to: if no another such split frame is received within the predefined time period, determine a lost frame serial number as the target frame serial number according to a frame serial number, a split frame serial number and the total number of the split frames carried in the data header of the split frame.

According to another aspect of embodiments of the present disclosure, an apparatus for use in adjusting video quality based on a network environment is provided. The apparatus includes:
a processor; and
a memory for storing instructions executable by the processor;
wherein the processor is configured to:
receive a target frame serial number of a lost video frame from a terminal, the target frame serial number being for uniquely distinguishing video frames from each other, and use time when the target frame serial number is received as a timestamp of the target frame serial number;
determine the number of target frame serial numbers corresponding to the timestamps within a predefined time period;
lower a designated quality parameter according to a predefined configuration criterion when the number of target frame serial numbers is greater than a first threshold; or increase the designated quality parameter according to the predefined configuration criterion when the number of target frame serial numbers is less than a second threshold, the first threshold being greater than the second threshold.

Prior to receiving a target frame serial number of a lost video frame from a terminal, the processor is further configured to determine whether a video frame is a key frame; and when the video frame is the key frame, split the key frame into a plurality of split frames carrying data headers according to a predefined splitting criterion, the data header comprising a frame serial number of the key frame, a split frame serial number of the split frame, and the total number of the plurality of split frames, then sequentially send the plurality of split frames carrying data headers to the terminal; and when the video frame is not the key frame, sending the video frame carrying a frame serial number to the terminal. When the target frame serial number comprises a frame serial number and a split frame serial number and a current number of retransmission times corresponding to the target frame serial number is less than a retransmission threshold, determine that the terminal has lost the split frame, sending the video frame carrying the target frame serial number to the terminal, and progressively accumulate the current number of retransmission times by one; and when the target frame serial number comprises the frame serial number and the split frame serial number and the current number of retransmission times corresponding to the target frame serial number is not less than the retransmission threshold, perform the step of determining the number of target frame serial numbers corresponding to the timestamps within a predefined time period.

According to a sixth aspect of embodiments of the present disclosure, there is provided a computer program which, when being executed on a processor of an apparatus, performs the method of the first aspect of embodiments of the present disclosure.

The technical solutions provided in the embodiments of the present disclosure may achieve the following beneficial effects. It may be determined whether the current network environment is poor or good by determining the number of video frames lost by the terminal within unit time. When it is determined that the number of target frame serial numbers is greater than the first threshold, it indicates that more video frames are lost within unit time, and the current network environment is poor. Therefore, the designated quality parameter may be lowered to reduce the transmission rate, thereby ensuring that the user can watch smooth video over the terminal. When it is determined that the number of target frame serial numbers is less than a second threshold, it indicates that few video frames are lost within unit time, and the current network environment is good. Therefore, the designated quality parameter may be increased to increase the transmission rate, thereby ensuring that the user can watch the video with high definition over the terminal. Therefore, the present disclosure may ensure that in a poor network environment, the image collecting device reduces the image definition of the video, such that a terminal smoothly plays the video with low definition; in a good network environment, the image collecting device increases the image definition of the video, such that the terminal smoothly plays the video with high definition.

It shall be appreciated that the above general description and the detailed description hereinafter are only illustrative and interpretative, but not for limiting the present disclosure.

### BRIEF DESCRIPTION OF THE DRAWINGS

The accompanying drawings herein, which are incorporated into and constitute a part of the specification, illustrate embodiments consistent with the present disclosure, and together with the description, serve to explain the principles of the present disclosure.
FIG. 1 is a flowchart illustrating a method for adjusting video quality based on a network environment according to an exemplary embodiment of the present disclosure;
FIG. 2 is a flowchart illustrating another method for adjusting video quality based on a network environment according to an exemplary embodiment of the present disclosure;
FIG. 3 is a flowchart illustrating another method for adjusting video quality based on a network environment according to an exemplary embodiment of the present disclosure;
FIG. 4 is a structural block diagram illustrating a split frame according to an exemplary embodiment of the present disclosure;
FIG. 5 is a flowchart illustrating another method for adjusting video quality based on a network environment according to an exemplary embodiment of the present disclosure;
FIG. 6 is a schematic diagram illustrating an apparatus for adjusting video quality based on a network environment according to an exemplary embodiment of the present disclosure;
FIG. 7 is a schematic diagram illustrating another apparatus for adjusting video quality based on a network environment according to an exemplary embodiment of the present disclosure; and
FIG. 8 is a block diagram illustrating an apparatus for adjusting video quality based on a network environment according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

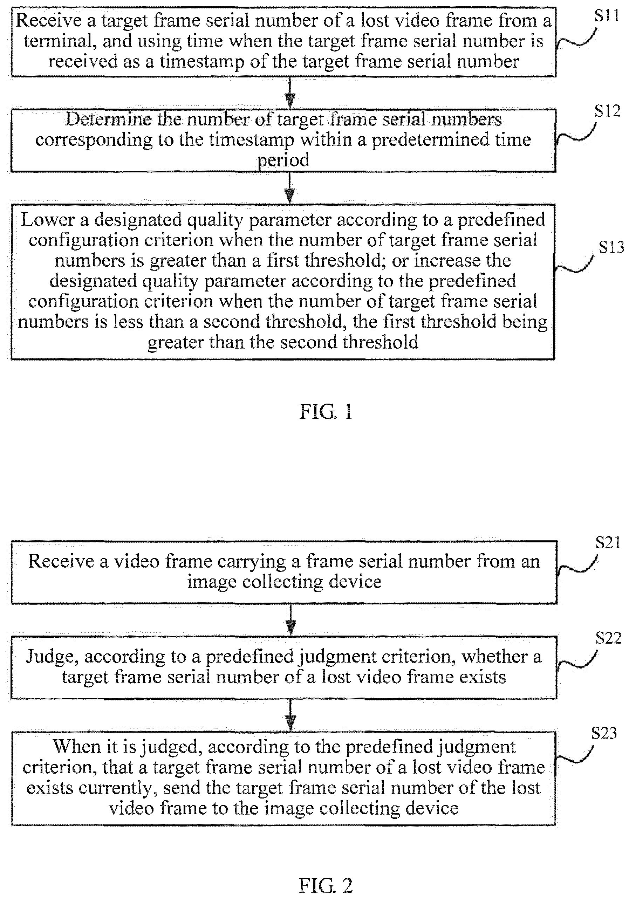

FIG. 1 is a flowchart illustrating a method for adjusting video quality based on a network environment according to an exemplary embodiment of the present disclosure. As illustrated in FIG. 1, the method for adjusting video quality based on a network environment may be applied in an image collecting device. The method for adjusting video quality based on a network environment according to the present disclosure may ensure that in a poor network environment, the image collecting device reduces the image definition of the video, such that a terminal smoothly plays the video with low definition; in a good network environment, the image collecting device increases the image definition of the video, such that the terminal smoothly plays the video with high definition. The method includes the following steps.

In step S11, a target frame serial number of a lost video frame is received from a terminal, and time when the target frame serial number is received is used as a timestamp of the target frame serial number.

In step S12, the number of target frame serial numbers corresponding to the timestamps within a predefined time period is determined.

In step S13, a designated quality parameter is lowered according to a predefined configuration criterion when the number of target frame serial numbers is greater than a first threshold; or the designated quality parameter is increased according to the predefined configuration criterion when the number of target frame serial numbers is less than a second threshold, wherein the first threshold is greater than the second threshold.

In another embodiment, the method further includes:
acquiring collected video data;
compressing the video data into video frames carrying frame serial numbers by using a predefined video coding method according to a designated quality parameter; and
sending the video frames carrying frame serial numbers to the terminal.

In another embodiment, prior to the receiving a target frame serial number of a lost video frame from a terminal, the method further includes:
judging whether the video frame is a key frame;
when the video frame is the key frame, splitting the key frame into a plurality of split frames carrying data headers according to a predefined splitting criterion, the data header including a frame serial number of the key frame, a split frame serial number of the split frame, and the total number of the plurality of split frames; and sequentially sending the plurality of split frames carrying data headers to the terminal; and
when the video frame is not the key frame, sending the video frame carrying a frame serial number to the terminal.

In another embodiment, the method further includes:
when the target frame serial number includes a frame serial number and a split frame serial number and the current number of retransmission times corresponding to the target frame serial number is less than a retransmission threshold, determining a video frame carrying the target frame serial number;
sending the video frame carrying the target frame serial number to the terminal, and progressively accumulating the current number of retransmission times by one; and
when the target frame serial number includes the frame serial number and the split frame serial number, and the current number of retransmission times corresponding to the target frame serial number is not less than the retransmission threshold, performing the step of determining the number of target frame serial numbers corresponding to the timestamps within a predefined time period.

As illustrated in FIG. 2, the method for adjusting video quality based on a network environment may be applied in a terminal device.

In step S21, a video frame carrying a frame serial number is received from an image collecting device, wherein the video frame carrying a frame serial number is formed by compressing video data by the image collecting device using a predefined video coding method according to a designated quality parameter.

In step S22, it is determined, according to a predefined judgment criterion, whether a target frame serial number of a lost video frame exists.

In step S23, when it is determined, according to the predefined judgment criterion, that a target frame serial number of a lost video frame exists currently, the target frame serial number of the lost video frame is sent to the image collecting device, such that the image collecting device uses time when the target frame serial number is received as a timestamp of the target frame serial number, and determines the number of target frame serial numbers corresponding to the timestamps within a predefined time period, to adjust the designated quality parameter.

In another embodiment, the step of judging, according to a predefined judgment criterion, whether a target frame serial number of a lost video frame exists includes:
when the received video frame is a non-split key frame or prediction frame, judging whether the frame serial number of the currently received video frame is contiguous to a frame serial number of a previously received video frame; and
when the frame serial number of the currently received video frame is non-contiguous to a frame serial number of a previously received video frame, determining a lost frame serial number as the target frame serial number according to the frame serial number of the currently received video frame and the frame serial number of the previously received video frame.

In another embodiment, the method further includes:
when the received video frame is a split frame split according to a key frame and carrying a data header, judging whether no another such split frame is received within a predefined time period; and
if no another such split frame is received within the predefined time period, determining a lost frame serial number as the target frame serial number according to a frame serial number, a split frame serial number and the total number of the split frames carried in the data header of the split frame.

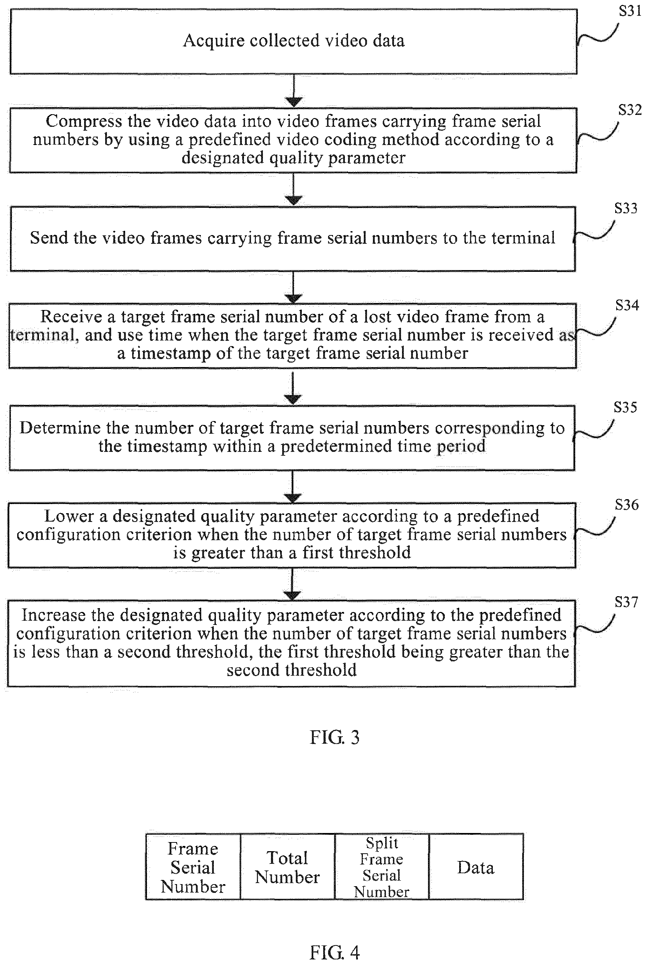

The method for adjusting video quality based on a network environment is described with reference to another embodiment. As illustrated in FIG. 3, the method includes the following steps.

In step S31, collected video data is acquired.

The method according to the present disclosure may be applied in an image collecting device, wherein the image collecting device may be a camera or a video recorder or the like. After collecting video data, the image collecting device needs to acquire the video data for subsequent use.

In step S32, the video data is compressed into video frames carrying frame serial numbers by using a predefined video coding method according to a designated quality parameter.

After the video data is acquired, the video data needs to be compressed by using a predefined video coding method according to a designated quality parameter, to generate video frames carrying frame serial numbers. The predefined video coding method may be such a coding standard as H.262, H.263, or H.264. Nevertheless, the coding method is not limited to such coding standards. The designated quality parameter is a coding parameter of the predefined video coding method. The higher the designated quality parameter is, the higher the image quality of the video frames generated via coding is, and the higher the definition of the video frames is. On the contrary, the lower the designated quality parameter is, the lower the image quality of the video frames generated via coding is, and the lower the definition of the video frames is. The designated quality parameter may be such a parameter as video bit rate or definition. Each video frame has a unique frame serial number, and video frames are distinguished from each other via their frame serial numbers.

In step S33, a video frame carrying a frame serial number is sent to a terminal.

After generating the video frames carrying frame serial numbers, the image collecting device sends the video frames carrying frame serial numbers to the terminal.

In step S34, a target frame serial number of a lost video frame is received from a terminal, and time when the target frame serial number is received is used as a timestamp of the target frame serial number.

When the image collecting device sequentially sends video frames carrying frame serial numbers to the terminal, if the terminal fails to receive a video frame within a certain time period, the terminal may consider that the video frame is lost. After determining the target frame serial number of the lost video frame, the terminal may send the target frame serial number of the lost video frame to the image collecting device, to inform the image collecting device of the target frame serial number of the lost video frame. After receiving the target frame serial number of the lost video frame, the image collecting device may use the time when the target frame serial number is received as a timestamp of the target frame serial number.

For example, if the target frame serial number of the lost video frame sent by the terminal is 1001, the time when the image collecting device receives the target frame serial number 1001 is 9:25':39", which is used as the timestamp of the target frame serial number 1001. Nevertheless, for more accurate determination in the subsequent steps, the timestamp may be accurate to millisecond or microsecond.

In step S35, the number of target frame serial numbers corresponding to the timestamps within a predefined time period is determined.

During the process of sequentially sending the video frames carrying frame serial numbers by the image collecting device to the terminal, the terminal may also send the lost target frame serial number to the image collecting device; and the image collecting device configures a timestamp for each target frame serial number. Therefore, the image collecting device may determine the number of target frame serial numbers corresponding to the timestamps within a time period.

For example, assume that the target frame serial numbers of the lost video frames received by the image collecting device from the terminal are respectively 1001, 1003, 1007, 1025, and 1056, the timestamp of the target frame serial number 1001 is 10:10':25", the timestamp of the target frame serial number 1003 is 10:10':26", the timestamp of the target frame serial number 1007 is 10:10':28", the timestamp of the target frame serial number 1025 is 10:10':30", the timestamp of the target frame serial number 1056 is 10:10':31", then if the image collecting device needs to determine the number of target frame serial numbers between 10:10':26" and 10:10':30", through determination, there are three target frame serial numbers present in this time period, and these three target frame serial numbers are 1003, 1007, and 1025.

In step S36, a designated quality parameter is lowered according to a predefined configuration criterion when the number of target frame serial numbers is greater than a first threshold.

The image collecting device may predefine two thresholds, i.e., a first threshold and a second threshold. If the number of target frame serial numbers is greater than the first threshold, it indicates that more video frames are lost within unit time, and the current network environment is poor. Therefore, the designated quality parameter may be lowered, such that with the predefined video coding method, video frames with low quality are generated when collected video data is subsequently compressed and coded, to reduce the transmission rate of the image collecting device. This ensures that in a poor network environment, the terminal may still smoothly play the video, thereby preventing freezing image of the video even in a poor network environment.

In step S37, the designated quality parameter is increased according to the predefined configuration criterion when the number of target frame serial numbers is less than a second threshold, wherein the first threshold is greater than the second threshold.

If the number of target frame serial numbers is less than the second threshold, it indicates that few video frames are lost within unit time, and the current network environment is good. Therefore, the designated quality parameter may be increased, such that with the predefined video coding method, video frames with high quality are generated when collected video data is subsequently compressed and coded, to increase the transmission rate of the image collecting device. This ensures that in a good network environment, the terminal may smoothly play the video with high definition, thereby preventing the image collecting device from still sending predefined video resources with low quality to the terminal in a good network environment, and avoiding waste of the network bandwidth resources.

In the embodiment as illustrated in FIG. 3, it may be determined whether the current network environment is poor or good by determining the number of lost video frames of the terminal within unit time. When it is determined that the number of target frame serial numbers is greater than the first threshold, it indicates that more video frames are lost within unit time, and the current network environment is poor. Therefore, the designated quality parameter may be lowered to reduce the transmission rate, thereby ensuring that the user can watch smooth video over the terminal. When it is determined that the number of target frame serial numbers is less than a second threshold, it indicates that few video frames are lost within unit time, and the current network environment is good. Therefore, the designated quality parameter may be increased to increase the transmission rate, thereby ensuring that the user can watch the video with high definition over the terminal. Therefore, the present disclosure may ensure that in a poor network environment, the image collecting device reduces the image definition of the video, such that a terminal smoothly plays the video with low definition; in a good network environment, the image collecting device increases the image definition of the video, such that the terminal smoothly plays the video with high definition.

In an optional embodiment of the present disclosure, after step S32 and prior to step S33, the method according to the present disclosure may further include the following steps: judging whether the video frame is a key frame; when the video frame is the key frame, splitting the key frame into a plurality of split frames carrying data headers according to a predefined splitting criterion, the data header including a frame serial number of the key frame, a split frame serial number of the split frame, and the total number of the plurality of split frames, sequentially sending the plurality of split frames carrying data headers to the terminal, and performing step S34; and when the video frame is not the key frame, performing step S33.

The above steps are intended to generate key frames and prediction frames after the video data is compressed by using a predefined video coding method, wherein the key frame may be referred to as an I frame and the prediction frame may be referred to as a P frame. Since the I frame has a large data volume, which is an independent frame and is not associated with the previous and next data frames, even if a previous frame is lost or has an error, display of the I frame may not be affected. The decoding can be implemented only with the I frame. Therefore, the I frame is very important. The P frame is a prediction frame, which indicates a difference between this frame and a previous I frame or P frame. During the decoding, the previously cached image needs to be superposed with the difference defined by the frame. Therefore, the P frame is greatly associated with a previous frame but has a small data volume. If a previous frame is lost or has an error, display of the P frame may be affected, but display of other frames may not be affected. Therefore, the P frame is not very important. When it is determined that the video frame is a key frame, to prevent the key frame from being completely lost during transmission, the key frame is split into a plurality of split frames carrying data headers according to a predefined splitting criterion. As such, one key frame is split into a plurality of split frames, and each of the split frames carries a data header, wherein the data header includes a frame serial number of the key frame, a split frame serial number of the split frame, and the total number of split frames, such that the terminal may determine, according to the data in the data headers, which split frame in the key frame is lost. Afterwards, the terminal may send the split frame serial number of the lost split frame and the frame serial number of the key frame to the image collecting device, such that the image collecting device can search for the corresponding split frame according to the split frame serial number and the frame serial number sent by the terminal, and re-send the lost split frame to the terminal. Therefore, with the method according to the present disclosure, a lost key frame may be found.

Referring to FIG. 4, a structural block diagram of a split frame is illustrated. The split frame includes a frame serial number of a key frame, the total number of split frames, a split frame serial number of a split frame, and a data body. The frame serial number, the total number, and the split frame serial number indicate the data header.

In addition, the predefined splitting criterion may be: making the size of each split frame obtained after the key frame is split less than a maximum transmission unit in the current network environment. For example, assume that the maximum transmission unit in the current network environment is 1500 bytes, then the size of each of the split frames may be set to 1024 bytes, or to 1040 bytes, or to 900 bytes. To sum up, the size of each split frame needs to be less than the maximum transmission unit 1500 bytes.

For example, assume that the image collecting device has determined that the video frame that is currently to be sent is a key frame, the frame serial number of the key frame is 101, the size of the key frame is 5000 bytes, and the maximum transmission unit in the current network environment is 1500 bytes, the user presets the size of each split frame to 1000 bytes, then the image collecting device may split the key frame carrying frame serial number 101 into five split frames each having a size of 1000 bytes, and these five split frames all have a data header. The data header of the first split frame includes the frame serial number 101, the split frame serial number 1001 of the split frame, and the total number 5 of split frames. The data header of the second split frame includes the frame serial number 101, the split frame serial number 1002 of the split frame, and the total number 5 of split frames. The data header of the third split frame includes the frame serial number 101, the split frame serial number 1003 of the split frame, and the total number 5 of split frames. The data header of the fourth split frame includes the frame serial number 101, the split frame serial number 1004 of the split frame, and the total number 5 of split frames. The data header of the fifth split frame includes the frame serial number 101, the split frame serial number 1005 of the split frame, and the total number 5 of split frames. After the splitting, the five split frames carrying data headers are sequentially transmitted to the terminal.

In another optional embodiment of the present disclosure, based on the above embodiment, after step S34, the method according to the present disclosure may further include the following steps: when the target frame serial number includes a frame serial number and a split frame serial number and the current number of retransmission times corresponding to the target frame serial number is less than a retransmission threshold, determining a video frame carrying the target frame serial number, sending the video frame carrying the target frame serial number to the terminal, progressively accumulating the current number of retransmission times by one, and performing step S35; and when the target frame serial number includes the frame serial number and the split frame serial number and the current number of retransmission times corresponding to the target frame serial number is not less than the retransmission threshold, performing step S35.

The above steps are performed because as described in the above embodiment, when the image collecting device determines that the data frame is a key frame, the key frame may be split into a plurality of split frames carrying data headers. If the target frame serial number received by the image collecting device from the terminal includes a frame serial number and a split frame serial number, and the current number of retransmission times corresponding to the target frame serial number is less than a retransmission threshold, it indicates that the terminal has lost the split frame, and the image collecting device needs to re-send the split frame for one time. In this case, the image collecting device needs to determine whether the target frame serial number sent by the terminal includes the frame serial number and the split frame serial number. If the target frame serial number includes the frame serial number and the split frame serial number, it indicates that the target frame serial number corresponds to a split frame. In addition, the image collecting device needs to determine the current number of retransmission times corresponding to the frame serial number and the split frame serial number. If the current number of retransmission times is less than the retransmission threshold, the image collecting device may determine the video frame carrying the target frame serial number, send the video frame carrying the target frame serial number to the terminal, and progressively accumulate the current number of retransmission times by one, to compensate for the split frame lost by the terminal. If the current number of retransmission times is not less than the retransmission threshold, it indicates that the image collecting device has sent the split frame to the terminal for multiple times, and the retransmission times has reached an upper limit. Therefore, even if the terminal has lost the split frame, the image collecting device may not constantly send the split frame to the terminal. In this case, the image collecting device may not send the lost split frame to the terminal.

For example, assume that the image collecting device has determined that the video frame which is currently to be sent is a key frame, the frame serial number of the key frame is 101, the size of the key frame is 5000 bytes, and the maximum transmission unit in the current network environment is 1500 bytes, the user presets the size of each split frame to 1000 bytes, then the image collecting device may split the key frame carrying frame serial number 101 into five split frames each having a size of 1000 bytes, and these five split frames all have a data header. The data header of the first split frame includes the frame serial number 101, the split frame serial number 1001 of the split frame, and the total number 5 of split frames. The data header of the second split frame includes the frame serial number 101, the split frame serial number 1002 of the split frame, and the total number 5 of split frames. The data header of the third split frame includes the frame serial number 101, the split frame serial number 1003 of the split frame, and the total number 5 of split frames. The data header of the fourth split frame includes the frame serial number 101, the split frame serial number 1004 of the split frame, and the total number 5 of split frames. The data header of the fifth split frame includes the frame serial number 101, the split frame serial number 1005 of the split frame, and the total number 5 of split frames. After the splitting, the five split frames carrying data headers are sequentially transmitted to the terminal. In this case, the image collecting device receives the target frame serial number of the lost video frame from the terminal, and determines that the target frame serial number includes the frame serial number 101 and the split frame serial number 1003. In addition, the image collecting device determines that the current number of retransmission times corresponding to the frame serial number 101 and the split frame serial number 1003 is 1, which is less than the retransmission threshold 3. Therefore, the image collecting device may determine the video frame carrying the frame serial number 101 and the split frame serial number 1003, send the video frame carrying the frame serial number 101 and the split frame serial number 1003 to the terminal, and progressively accumulate the current number of retransmission times by one. As such, the current number of retransmission times corresponding to the frame serial number 101 and the split frame serial number 1003 is 2.

In another optional embodiment of the present disclosure, based on the above embodiment, after step S34, the method according to the present disclosure may further include the following steps: when the target frame serial number is a frame serial number and the current number of retransmission times corresponding to the target frame serial number is less than a retransmission threshold, determining a video frame carrying the target frame serial number, sending the video frame carrying the target frame serial number to the terminal, progressively accumulating the current number of retransmission times by one, and performing step S35; and when the target frame serial number is a frame serial number and the current number of retransmission times corresponding to the target frame serial number is not less than the retransmission threshold, performing step S35.

The above steps are performed because when the target frame serial number only includes a frame serial number, it indicates that the frame serial number may correspond to a non-split key frame or a non-split prediction frame, and the current number of retransmission times corresponding to the target frame serial number is less than the retransmission threshold, which indicates that the terminal has lost the non-split key frame or the non-split prediction frame. Therefore, the image collecting device needs to re-send the non-split key frame or prediction frame for one time. In this case, the image collecting device needs to determine whether the target frame serial number sent by the terminal only includes the frame serial number. If the target frame serial number only includes the frame serial number, it indicates that the target frame serial number corresponds to a non-split key frame or a non-split prediction frame. In addition, the image collecting device needs to determine the current number of retransmission times corresponding to the frame serial number. If the current number of retransmission times is less than the retransmission threshold, the image collecting device may determine the video frame carrying the frame serial number, send the video frame carrying the frame serial number to the terminal, and progressively accumulate the current number of retransmission times by one, to compensate for the non-split key frame or the non-split prediction frame lost by the terminal. If the current number of retransmission times is not less than the retransmission threshold, it indicates that the image collecting device has sent the non-split key frame or the non-split prediction frame to the terminal for multiple times, and the number of retransmission times has reached an upper limit. Therefore, even if the terminal has lost the non-split key frame or prediction frame, the image collecting device may not constantly send the non-split key frame or prediction frame to the terminal. In this case, the image collecting device may not send the lost non-split key frame or the non-split prediction frame to the terminal.

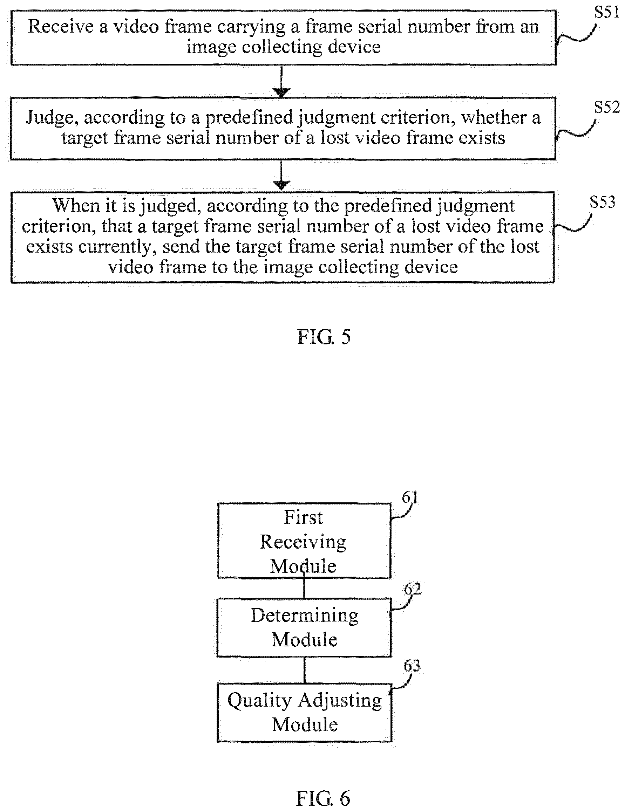

FIG. 5 is a flowchart illustrating another method for adjusting video quality based on a network environment according to an exemplary embodiment of the present disclosure. As illustrated in FIG. 5, the method for adjusting video quality based on a network environment may be applied in a terminal. The method for adjusting video quality based on a network environment according to the present disclosure may ensure that in a poor network environment, the image collecting device reduces the image definition of the video, such that a terminal smoothly plays the video with low definition; in a good network environment, the image collecting device increases the image definition of the video, such that the terminal smoothly plays the video with high definition. The method includes the following steps.

In step S51, a video frame carrying a frame serial number is received from an image collecting device, wherein the video frame carrying a frame serial number is formed by compressing video data by the image collecting device using a predefined video coding method according to a designated quality parameter.

The method as illustrated in FIG. 5 may be applied to a terminal, and the terminal may be such a smart device as a smart phone, a tablet computer, a desktop computer, or the like. As described in the first embodiment, the image collecting device may compress the collected video data into video frames carrying frame serial numbers by using a predefined video coding method according to a designated quality parameter, and send the video frames carrying frame serial numbers to the terminal. Via transmission over the network, the terminal may receive the video frames carrying frame serial numbers from the image collecting device.

In step S52, it is determined, according to a predefined judgment criterion, whether a target frame serial number of a lost video frame exists.

The predefined judgment criterion may be present in a plurality of manners and may be applied in different scenarios. When the video frame received by the terminal is a non-split key frame or prediction frame, the terminal may determine whether the frame serial number of the currently received video frame is contiguous to the frame serial number of a previously received video frame. If the frame serial numbers are contiguous to each other, it indicates that no video frame is lost between the currently received video frame and the previously received video frame. If the frame serial numbers are non-contiguous to each other, the lost frame serial number may be determined according to the frame serial number of the currently received video frame and the frame serial number of the previously received video frame, and the lost frame serial number may be referred to as the target frame serial number. For example, assume that the video frame received by the terminal is a non-split key frame or prediction frame, the frame serial number of the currently received video frame is 106, and the frame serial number of the previously received video frame is 105, then the terminal may determine that the frame serial numbers of the received video frames are contiguous, and thus no video frame is lost. Still for example, assume that the video frame received by the terminal is a non-split key frame or prediction frame, the frame serial number of the currently received video frame is 106, and the frame serial number of the previously received video frame is 104, then the terminal may determine that the frame serial numbers of the received video frames are non-contiguous. In this case, the terminal may determine the lost frame serial number 105 according to the frame serial number 106 of the currently received video frame and the frame serial number 104 of the previously received video frame, wherein the lost frame serial number 105 is referred to as the target frame serial number 105; and the terminal sends the target frame serial number 105 to the image collecting device.

When the video frames received by the terminal are split frames obtained by splitting the key frames, upon receiving a series of split frames, the terminal may determine whether no another such split frame is received within a predefined time period. If no another such split frame is received, the terminal may query the data headers of this series of split frames, and determine whether the number of received split frames is the same as the total number of split frames in the data headers. If they are same, the terminal may consider that no split frame in this series of split frames is lost. If they are different, the terminal may consider that one or more split frame in this series of split frames are lost, and determine which split frame is lost according to the split frame serial number in the data header of each split frame. When the split frame serial number of the lost split frame is determined, the terminal may use the frame serial number in the data header and the lost split frame serial number as the target frame serial number, and then send the target frame serial number to the image collecting device.

In step S53, when it is determined, according to the predefined judgment criterion, that a target frame serial number of a lost video frame exists currently, the target frame serial number of the lost video frame is sent to the image collecting device, such that the image collecting device uses time when the target frame serial number is received as a timestamp of the target frame serial number, and determines the number of target frame serial numbers corresponding to the timestamps within a predefined time period; and a designated quality parameter is lowered according to a predefined configuration criterion when the image collecting device determines that the number of target frame serial numbers is greater than a first threshold, or the designated quality parameter is increased according to the predefined configuration criterion when the image collecting device determines that the number of target frame serial numbers is less than a second threshold, wherein the first threshold is greater than the second threshold.

In the embodiment as illustrated in FIG. 2, since the method illustrated in FIG. 5 may be collaboratively applied with the method illustrated in FIG. 3, with respect to the related portions of the method illustrated in FIG. 2 and the method illustrated in FIG. 1, cross reference may be made, which are thus not described herein any further.

FIG. 6 is a schematic diagram illustrating an apparatus for adjusting video quality based on a network environment according to an exemplary embodiment of the present disclosure. The apparatus for adjusting video quality based on a network environment according to the present disclosure may ensure that in a poor network environment, the image collecting device reduces the image definition of the video, such that a terminal smoothly plays the video with low definition; in a good network environment, the image collecting device increases the image definition of the video, such that the terminal smoothly plays the video with high definition. Referring to FIG. 6, the apparatus includes:
a first receiving module 61, configured to receive a target frame serial number of a lost video frame from a terminal, and use time when the target frame serial number is received as a timestamp of the target frame serial number;
a determining module 62, configured to determine the number of target frame serial numbers corresponding to the timestamps within a predefined time period; and
a quality adjusting module 63, configured to: lower a designated quality parameter according to a predefined configuration criterion when the number of target frame serial numbers is greater than a first threshold; or increase the designated quality parameter according to the predefined configuration criterion when the number of target frame serial numbers is less than a second threshold, the first threshold being greater than the second threshold.

In another embodiment, the apparatus further includes:
an acquiring module, configured to acquire collected video data;
a compressing module, configured to compress the video data into video frames carrying frame serial numbers by using a predefined video coding method according to a designated quality parameter; and
a sending module, configured to send the video frames carrying frame serial numbers to the terminal.

In another embodiment, the apparatus further includes:
a judging module, configured to determine whether the video frame is a key frame; and
an executing module, configured to: when the video frame is the key frame, split the key frame into a plurality of split frames carrying data headers according to a predefined splitting criterion, the data header including a frame serial number of the key frame, a split frame serial number of the split frame, and the total number of the plurality of split frames; and sequentially send the plurality of split frames carrying data headers to the terminal; and when the video frame is not a key frame, send the video frame carrying the frame serial number to the terminal.

In another embodiment, the apparatus further includes:
a retransmission control module, configured to: when the target frame serial number includes a frame serial number and a split frame serial number and the current number of retransmission times corresponding to the target frame serial number is less than a retransmission threshold, determine a video frame carrying the target frame serial number, send the video frame carrying the target frame serial number to the terminal, and progressively accumulate the current number of retransmission times by one; and when the target frame serial number includes the frame serial number and the split frame serial number and the current number of retransmission times corresponding to the target frame serial number is not less than the retransmission threshold, execute the determining module.

With respect to the apparatuses in the above embodiments, the specific implementations of operations executed by various modules thereof have been described in detail in the embodiments illustrating the methods, which are not described herein any further.

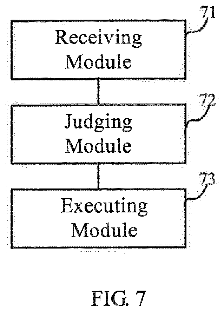

FIG. 7 is a schematic diagram illustrating another apparatus for adjusting video quality based on a network environment according to an exemplary embodiment of the present disclosure. The apparatus for adjusting video quality based on a network environment according to the present disclosure may ensure that in a poor network environment, the image collecting device reduces the image definition of the video, such that a terminal smoothly plays the video with low definition; in a good network environment, the image collecting device increases the image definition of the video, such that the terminal smoothly plays the video with high definition. Referring to FIG. 7, the apparatus includes: a receiving module 71, a judging module 72, and an executing module 73.

The receiving module 71 is configured to receive a video frame carrying a frame serial number from an image collecting device, the video frame carrying a frame serial number being formed by compressing video data by the image collecting device using a predefined video coding method according to a designated quality parameter.

The judging module 72 is configured to determine, according to a predefined judgment criterion, whether a target frame serial number of a lost video frame exists.

The executing module 73 is configured to: when it is determined, according to the predefined judgment criterion, that a target frame serial number of a lost video frame exists currently, send the target frame serial number of the lost video frame to the image collecting device, such that the image collecting device uses time when the target frame serial number is received as a timestamp of the target frame serial number, and determines the number of target frame serial numbers corresponding to the timestamps within a predefined time period; and lower a designated quality parameter according to a predefined configuration criterion when the image collecting device determines that the number of target frame serial numbers is greater than a first threshold, or increase the designated quality parameter according to the predefined configuration criterion when the image collecting device determines that the number of target frame serial numbers is less than a second threshold, the first threshold being greater than the second threshold.

In an optional embodiment of the present disclosure, the judging module 72 may include: a first judging submodule, configured to, when the received video frame is a non-split key frame or prediction frame, determine whether the frame serial number of the currently received video frame is contiguous to a frame serial number of a previously received video frame; and a first executing submodule, configured to, when the frame serial number of the currently received video frame is non-contiguous to a frame serial number of a previously received video frame, determine a lost frame serial number as the target frame serial number according to the frame serial number of the currently received video frame and the frame serial number of the previously received video frame.

In an optional embodiment of the present disclosure, the judging module 72 may include: a second judging submodule, configured to, when the received video frame is a split frame split according to a key frame and carrying a data header, determine whether no another such split frame is received within a predefined time period; and a second executing submodule, configured to, if no another such split frame is received within the predefined time period, determine a lost frame serial number as the target frame serial number according to a frame serial number, a split frame serial number and the total number of the split frames carried in the data header of the split frame.

With respect to the apparatuses in the above embodiments, the specific implementations of operations executed by various modules thereof have been described in detail in the embodiments illustrating the methods, which are not described herein any further.

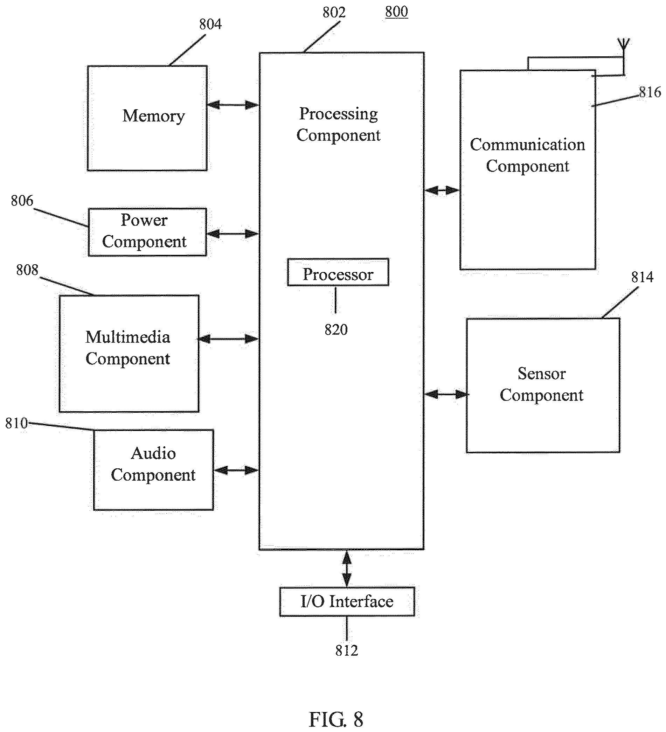

FIG. 8 is a block diagram illustrating an apparatus 800 for adjusting video quality based on a network environment according to an exemplary embodiment of the present disclosure. For example, the apparatus 800 may be a mobile phone, a computer, a digital broadcast terminal, a messaging device, a gaming console, a tablet, a medical device, an exercise equipment, a personal digital assistant, and the like.

Referring to FIG. 8, the apparatus 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the apparatus 800, such as the operations associated with display, telephone calls, data communications, camera operations, and recording operations. The processing component 802 may include one or more processors 820 to execute instructions to perform all or a part of the steps in the above-described methods. In addition, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operations of the apparatus 800. Examples of such data include instructions for any application or method operated on the apparatus 800, contact data, phonebook data, messages, pictures, videos, and the like. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the apparatus 800. The power component 806 may include a power management system, one or more power supplies, and other components associated with the generation, management, and distribution of power in the apparatus 800.

The multimedia component 808 includes a screen providing an output interface between the apparatus 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive external multimedia data while the apparatus 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the apparatus 800 is in an operation mode, such as a call mode, a recording mode, or a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and a peripheral interface module, such as a keyboard, a click wheel, a button, or the like. The buttons may include, but are not limited to, a home button, a volume button, a starting button, and a locking button.

The sensor component 814 includes one or more sensors to provide status assessments of various aspects of the apparatus 800. For example, the sensor component 814 may detect an open/closed status of the apparatus 800, relative positioning of components, e.g., the display and the keypad, of the apparatus 800, a change in position of the apparatus 800 or a component of the apparatus 800, a presence or absence of user contact with the apparatus 800, an orientation or an acceleration/deceleration of the apparatus 800, and a change in temperature of the apparatus 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communications, wired or wirelessly, between the apparatus 800 and other devices. The apparatus 800 may access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as included in the memory 804, executable by the processor 820 in the apparatus 800, for performing the above-described methods. For example, the non-transitory computer-readable storage medium may be a ROM, a random access memory (RAM), a compact disc read-only memory (CD-ROM), a magnetic tape, a floppy disc, an optical data storage device, or the like.

A non-transitory computer-readable storage medium is provided. When instructions stored in the storage medium are executed by a processor of a mobile terminal, the mobile terminal is caused to perform a method for adjusting video quality based on a network environment. The method includes: receiving a target frame serial number of a lost video frame from a terminal, and using time when the target frame serial number is received as a timestamp of the target frame serial number; determining the number of target frame serial numbers corresponding to the timestamp within a predefined time period; lowering a designated quality parameter according to a predefined configuration criterion when the number of target frame serial numbers is greater than a first threshold; or increasing the designated quality parameter according to the predefined configuration criterion when the number of target frame serial numbers is less than a second threshold, the first threshold being greater than the second threshold.

Other embodiments of the present disclosure will be apparent to those skilled in the art from consideration of the specification and practice disclosed herein. This application is intended to cover any variations, uses, or adaptations of the present disclosure following the general principles thereof and including such departures from the present disclosure as coming within common knowledge or customary technical means in the art. It is intended that the specification and embodiments be considered as exemplary only, with a scope of the present disclosure being indicated by the appended claims.

It will be appreciated that the present disclosure is not limited to the exact construction that has been described above and illustrated in the accompanying drawings, and that various modifications and changes can be made without departing from the scope thereof. The scope of the present disclosure is only defined by the appended claims.

## Claims

1. A method for adjusting video quality based on a network environment, wherein the method comprises the steps of:
determining whether a video frame is a key frame; and when the video frame is the key frame, splitting the key frame into a plurality of split frames carrying data headers according to a predefined splitting criterion, the data header comprising a frame serial number of the key frame, a split frame serial number of the split frame, and the total number of the plurality of split frames, then sequentially sending the plurality of split frames carrying data headers to the terminal; and when the video frame is not the key frame, sending the video frame carrying a frame serial number to the terminal;
receiving (S34) a target frame serial number of a lost video frame from a terminal, the target frame serial number being for uniquely distinguishing video frames from each other, and using time when the target frame serial number is received as a timestamp of the target frame serial number;
determining, when the target frame serial number comprises a frame serial number and a split frame serial number and a current number of retransmission times corresponding to the target frame serial number is less than a retransmission threshold, that the terminal has lost the split frame; sending the lost split frame carrying the target frame serial number to the terminal; and progressively accumulating the current number of retransmission times by one;
determining (S35), when the target frame serial number comprises the frame serial number and the split frame serial number and the current number of retransmission times corresponding to the target frame serial number is not less than the retransmission threshold, the number of target frame serial numbers corresponding to the timestamps within a predefined time period; and
lowering (S36) a designated quality parameter according to a predefined configuration criterion when the number of target frame serial numbers is greater than a first threshold; or increasing (S37) the designated quality parameter according to the predefined configuration criterion when the number of target frame serial numbers is less than a second threshold, the first threshold being greater than the second threshold.

2. The method for adjusting video quality based on a network environment according to claim 1, **characterized in that** the method further comprises:
acquiring (S31) collected video data;
compressing (S32) the video data into video frames carrying frame serial numbers by using a predefined video coding method according to a designated quality parameter; and
sending (S33) the video frames carrying frame serial numbers to the terminal.

3. An apparatus for adjusting video quality based on a network environment, comprising:
a first determining module, configured to determine whether a video frame is a key frame;
an executing module, configured to: when the video frame is the key frame, split the key frame into a plurality of split frames carrying data headers according to a predefined splitting criterion, the data header comprising a frame serial number of the key frame, a split frame serial number of the split frame, and the total number of the plurality of split frames, wherein a target frame serial number comprises the frame serial number and the split frame serial number; and sequentially send the plurality of split frames carrying data headers to the terminal; and when the video frame is not the key frame, send the video frame carrying a frame serial number to the terminal;
a first receiving module (61), configured to receive a target frame serial number of a lost split frame from a terminal, the target frame serial number being for uniquely distinguishing split frames from each other, and use time when the target frame serial number is received as a timestamp of the target frame serial number;
a retransmission control module, configured to: when the target frame serial number comprises a frame serial number and a split frame serial number and the current number of retransmission times corresponding to the target frame serial number is less than a retransmission threshold, determine that the apparatus has lost the split frame, and send the video frame carrying the target frame serial number to the terminal, and progressively accumulate the current number of retransmission times by one; and when the target frame serial number comprises the frame serial number and the split frame serial number and the current number of retransmission times corresponding to the target frame serial number is not less than the retransmission threshold, execute a second determining module (62);
the second determining module (62) being configured to determine the number of target frame serial numbers corresponding to the timestamps within a predefined time period;
a quality adjusting module (63), configured to: lower a designated quality parameter according to a predefined configuration criterion when the number of target frame serial numbers is greater than a first threshold; or increase the designated quality parameter according to the predefined configuration criterion when the number of target frame serial numbers is less than a second threshold, the first threshold being greater than the second threshold.

4. The apparatus for adjusting video quality based on a network environment according to claim 3, **characterized in that** the apparatus further comprises:
an acquiring module, configured to acquire collected video data;
a compressing module, configured to compress the video data into video frames carrying frame serial numbers by using a predefined video coding method according to a designated quality parameter; and
a sending module, configured to send the video frames carrying frame serial numbers to the terminal.

5. An apparatus for adjusting video quality based on a network environment, comprising:
a processor; and
a memory for storing instructions executable by the processor;
wherein the processor is configured to:
determine whether a video frame is a key frame; and when the video frame is the key frame, split the key frame into a plurality of split frames carrying data headers according to a predefined splitting criterion, the data header comprising a frame serial number of the key frame, a split frame serial number of the split frame, and the total number of the plurality of split frames, wherein the target frame serial number comprises the frame serial number and the split frame serial number, then sequentially send the plurality of split frames carrying data headers to the terminal; and when the video frame is not the key frame, sending the video frame carrying a frame serial number to the terminal;
receive a target frame serial number of a lost video frame from a terminal, the target frame serial number being for uniquely distinguishing video frames from each other, and use time when the target frame serial number is received as a timestamp of the target frame serial number;
determine, when the target frame serial number comprises a frame serial number and a split frame serial number and a current number of retransmission times corresponding to the target frame serial number is less than a retransmission threshold, that the terminal has lost the split frame; send the video frame carrying the target frame serial number to the terminal; and progressively accumulate the current number of retransmission times by one;
determine, when the target frame serial number comprises the frame serial number and the split frame serial number and the current number of retransmission times corresponding to the target frame serial number is not less than the retransmission threshold, the number of target frame serial numbers corresponding to the timestamps within a predefined time period; and
lower a designated quality parameter according to a predefined configuration criterion when the number of target frame serial numbers is greater than a first threshold; or
increase the designated quality parameter according to the predefined configuration criterion when the number of target frame serial numbers is less than a second threshold, the first threshold being greater than the second threshold.

6. A computer program which, when being executed on a processor of an apparatus, performs a method according to any one of claims 1 or 2.

## Patentansprüche

1. Verfahren zum Justieren von Videoqualität auf der Basis einer Netzwerkumgebung, wobei das Verfahren die folgenden Schritte beinhaltet:
Feststellen, ob ein Video-Frame ein Keyframe ist; und wenn der Video-Frame der Keyframe ist, Unterteilen des Keyframe in mehrere geteilte Frames, die Daten-Header führen, gemäß einem vordefinierten Teilungskriterium, wobei der Daten-Header eine Frame-Seriennummer des Keyframe, eine Geteilter-Frame-Seriennummer des geteilten Frame und die Gesamtzahl der mehreren geteilten Frames umfasst, dann sequentielles Senden der mehreren Daten-Header führenden geteilten Frames zum Terminal; und Senden, wenn der Video-Frame nicht der Keyframe ist, des die Frame-Seriennummer führenden Video-Frame zum Terminal;
Empfangen (S34) einer Ziel-Frame-Seriennummer eines verlorenen Video-Frame von einem Terminal, wobei die Ziel-Frame-Seriennummer zum eindeutigen Unterscheiden von Video-Frames voneinander dient, und Benutzen von Zeit, wenn die Ziel-Frame-Seriennummer empfangen wird, als Zeitstempel der Ziel-Frame-Seriennummer;
Feststellen, wenn die Ziel-Frame-Seriennummer eine Frame-Seriennummer und eine Geteilter-Frame-Seriennummer umfasst und eine aktuelle Anzahl von Neuübertragungszeiten entsprechend der Ziel-Frame-Seriennummer kleiner ist als eine Neuübertragungsschwelle, dass das Terminal den geteilten Frame verloren hat; Senden des die Ziel-Frame-Seriennummer führenden verlorenen geteilten Frame zum Terminal; und progressives Akkumulieren der aktuellen Anzahl von Neuübertragungszeiten um eins;
Feststellen (S35), wenn die Ziel-Frame-Seriennummer die Frame-Seriennummer und die Geteilter-Frame-Seriennummer umfasst und die aktuelle Anzahl von Neuübertragungszeiten entsprechend der Ziel-Frame-Seriennummer nicht kleiner ist als die Neuübertragungsschwelle, der Anzahl von Ziel-Frame-Seriennummern entsprechend den Zeitstempeln innerhalb einer vordefinierten Zeitperiode; und
Verringern (S36) eines designierten Qualitätsparameters gemäß einem vordefinierten Konfigurationskriterium, wenn die Anzahl von Ziel-Frame-Seriennummern größer ist als eine erste Schwelle; oder
Erhöhen (S37) des designierten Qualitätsparameters gemäß dem vordefinierten Konfigurationskriterium, wenn die Anzahl von Ziel-Frame-Seriennummern kleiner ist als eine zweite Schwelle, wobei die erste Schwelle größer ist als die zweite Schwelle.

2. Verfahren zum Justieren von Videoqualität auf der Basis einer Netzwerkumgebung gemäß Anspruch 1, **dadurch gekennzeichnet, dass** das Verfahren ferner Folgendes beinhaltet:
Erfassen (S31) von gesammelten Videodaten;
Komprimieren (S32) der Videodaten zu Frame-Serienummern führenden Video-Frames durch Anwenden eines vordefinierten Videocodierverfahrens gemäß einem designierten Qualitätsparameter; und
Senden (S33) der Frame-Seriennummern führenden Video-Frames zum Terminal.

3. Vorrichtung zum Justieren von Videoqualität auf der Basis einer Netzwerkumgebung, die Folgendes umfasst:
ein erstes Bestimmungsmodul, konfiguriert zum Bestimmen, ob ein Video-Frame ein Keyframe ist;
ein Ausführungsmodul, konfiguriert zum: Teilen, wenn der Video-Frame der Keyframe ist, des Keyframe in mehrere Daten-Header führende geteilte Frames gemäß einem vordefinierten Teilungskriterium, wobei der Daten-Header eine Frame-Seriennummer des Keyframe, eine Geteilter-Frame-Seriennummer des geteilten Frame und die Gesamtzahl der mehreren geteilten Frames umfasst, wobei eine Ziel-Frame-Seriennummer die Frame-Seriennummer und die Geteilter-Frame-Seriennummer umfasst; und sequentielles Senden der Daten-Header führenden mehreren geteilten Frames zum Terminal; und Senden, wenn der Video-Frame nicht der Keyframe ist, des eine Frame-Seriennummer führenden Video-Frame zum Terminal;
ein erstes Empfangsmodul (61), konfiguriert zum Empfangen einer Ziel-Frame-Seriennummer eines verlorenen geteilten Frame von einem Terminal, wobei die Ziel-Frame-Seriennummer zum eindeutigen Unterscheiden von geteilten Frames voneinander dient, und Benutzen von Zeit, wenn die Ziel-Frame-Seriennummer empfangen wird, als Zeitstempel der Ziel-Frame-Seriennummer;
ein Neuübertragungssteuermodul, konfiguriert zum: Bestimmen, wenn die Ziel-Frame-Seriennummer eine Frame-Seriennummer und eine Geteilter-Frame-Seriennummer umfasst und die aktuelle Anzahl von Neuübertragungszeiten entsprechend der Ziel-Frame-Seriennummer kleiner ist als eine Neuübertragungsschwelle, dass die Vorrichtung den geteilten Frame verloren hat, und Senden des die Ziel-Frame-Seriennummer führenden Video-Frame zum Terminal, und progressives Akkumulieren der aktuellen Anzahl von Neuübertragungszeiten um eins; und Ausführen, wenn die Ziel-Frame-Seriennummer die Frame-Seriennummer und die Geteilter-Frame-Seriennummer umfasst und die aktuelle Anzahl von Neuübertragungszeiten entsprechend der Ziel-Frame-Seriennummer nicht kleiner ist als die Neuübertragungsschwelle, eines zweiten Bestimmungsmoduls (62) ;
wobei das zweite Bestimmungsmodul (62) zum Bestimmen der Anzahl von Ziel-Frame-Seriennummern entsprechend den Zeitstempeln innerhalb einer vordefinierten Zeitperiode konfiguriert ist;
ein Qualitätsjustiermodul (63), konfiguriert zum: Verringern eines designierten Qualitätsparameters gemäß einem vordefinierten Konfigurationskriterium, wenn die Anzahl von Ziel-Frame-Seriennummern größer ist als eine erste Schwelle; oder Erhöhen des designierten Qualitätsparameters gemäß dem vordefinierten Konfigurationskriterium, wenn die Anzahl von Ziel-Frame-Seriennummern kleiner ist als eine zweite Schwelle, wobei die erste Schwelle größer ist als die zweite Schwelle.

4. Vorrichtung zum Justieren von Videoqualität auf der Basis einer Netzwerkumgebung gemäß Anspruch 3, **dadurch gekennzeichnet, dass** die Vorrichtung ferner Folgendes umfasst:
ein Erfassungsmodul, konfiguriert zum Erfassen von gesammelten Videodaten;
ein Kompressionsmodul, konfiguriert zum Komprimieren der Videodaten zu Frame-Seriennummern führenden Video-Frames mit einem vordefinierten Videocodierverfahren gemäß einem designierten Qualitätsparameter; und
ein Sendemodul, konfiguriert zum Senden der Frame-Seriennummern führenden Video-Frames zum Terminal.

5. Vorrichtung zum Justieren von Videoqualität auf der Basis einer Netzwerkumgebung, die Folgendes umfasst:
einen Prozessor; und
einen Speicher zum Speichern von von dem Prozessor ausführbaren Befehlen;
wobei der Prozessor konfiguriert ist zum:
Feststellen, ob ein Video-Frame ein Keyframe ist; und Teilen, wenn der Video-Frame der Keyframe ist, des Keyframe in mehrere Daten-Header führende geteilte Frames gemäß einem vordefinierten Teilungskriterium, wobei der Daten-Header eine Frame-Seriennummer des Keyframe, eine Geteilter-Frame-Seriennummer des geteilten Frame und die Gesamtzahl der mehreren geteilten Frames umfasst, wobei die Ziel-Frame-Seriennummer die Frame-Seriennummer und die Geteilter-Frame-Seriennummer umfasst, dann sequentielles Senden der mehreren Daten-Header führenden geteilten Frames zum Terminal; und Senden, wenn der Video-Frame nicht der Keyframe ist, des eine Frame-Seriennummer führenden Video-Frame zum Terminal;
Empfangen einer Ziel-Frame-Seriennummer eines verlorenen Video-Frame von einem Terminal, wobei die Ziel-Frame-Seriennummer zum eindeutigen Unterscheiden von Video-Frames voneinander dient, und Benutzen von Zeit, wenn die Ziel-Frame-Seriennummer empfangen wird, als Zeitstempel der Ziel-Frame-Seriennummer;
Feststellen, wenn die Ziel-Frame-Seriennummer eine Frame-Seriennummer und eine Geteilter-Frame-Seriennummer umfasst und eine aktuelle Anzahl von Neuübertragungszeiten entsprechend der Ziel-Frame-Seriennummer kleiner ist als eine Neuübertragungsschwelle, dass das Terminal den geteilten Frame verloren hat; Senden des die Ziel-Frame-Seriennummer führenden Video-Frame zum Terminal; und progressives Akkumulieren der aktuellen Anzahl von Neuübertragungszeiten um eins;
Bestimmen, wenn die Ziel-Frame-Seriennummer die Frame-Seriennummer und die Geteilter-Frame-Seriennummer umfasst und die aktuelle Anzahl von Neuübertragungszeiten entsprechend der Ziel-Frame-Seriennummer nicht kleiner ist als die Neuübertragungsschwelle, der Anzahl von Ziel-Frame-Seriennummern entsprechend den Zeitstempeln innerhalb einer vordefinierten Zeitperiode; und
Verringern eines designierten Qualitätsparameters gemäß einem vordefinierten Konfigurationskriterium, wenn die Anzahl von Ziel-Frame-Seriennummern größer ist als eine erste Schwelle; oder
Erhöhen des designierten Qualitätsparameters gemäß dem vordefinierten Konfigurationskriterium, wenn die Anzahl von Ziel-Frame-Seriennummern kleiner ist als eine zweite Schwelle, wobei die erste Schwelle größer ist als die zweite Schwelle.

6. Computerprogramm, das bei Ausführung auf einem Prozessor einer Vorrichtung ein Verfahren nach Anspruch 1 oder 2 durchführt.

## Revendications

1. Procédé de réglage de qualité vidéo basé sur un environnement réseau, où le procédé comprend les étapes consistant à :
déterminer si une trame vidéo est une trame clé ; et lorsque la trame vidéo est la trame clé, diviser la trame clé en une pluralité de trames divisées portant des en-têtes de données conformément à un critère de division prédéfini, l'en-tête de données comprenant un numéro de série de trame de la trame clé, un numéro de série de trame divisée de trame divisée, et le nombre total de la pluralité de trames divisées, puis à envoyer séquentiellement la pluralité de trames divisées portant des en-têtes de données au terminal ; et lorsque la trame vidéo n'est pas la trame clé, envoyer la trame vidéo portant un numéro de série de trame au terminal ;
recevoir (S34) un numéro de série de trame cible d'une trame vidéo perdue d'un terminal, le numéro de série de trame cible ayant pour objet de distinguer de manière unique des trames vidéo les unes des autres, et utiliser l'heure à laquelle le numéro de série de trame cible est reçu comme un timbre horaire du numéro de série de trame cible ;
déterminer, lorsque le numéro de série de trame cible comprend un numéro de série de trame et un numéro de série de trame divisée et qu'un nombre courant de temps de retransmission correspondant au numéro de série de trame cible est moindre qu'un seuil de retransmission, que le terminal a perdu la trame divisée ; envoyer la trame divisée perdue portant le numéro de série de trame cible au terminal ; et accumuler progressivement de un le nombre courant de temps de retransmission ;
déterminer (S35), lorsque le numéro de série de trame cible comprend le numéro de série de trame et le numéro de série de trame divisée et que le nombre courant de temps de retransmission correspondant au numéro de série de trame cible n'est pas moindre que le seuil de retransmission, le nombre de numéros de série de trame cible correspondant aux timbres horaires dans une période de temps prédéfinie ; et
abaisser (S36) un paramètre de qualité désigné conformément à un critère de configuration prédéfini lorsque le nombre de numéros de série de trame cible est plus grand qu'un premier seuil ; ou bien
accroître (S37) le paramètre de qualité désigné conformément au critère de configuration prédéfini lorsque le nombre de numéros de série de trame cible est moindre qu'un deuxième seuil, le premier seuil étant plus grand que le deuxième seuil.

2. Procédé de réglage de qualité vidéo basé sur un environnement réseau selon la revendication 1, **caractérisé en ce que** le procédé comprend en outre :
acquérir (S31) des données vidéo recueillies ;
comprimer (S32) les données vidéo dans des trames vidéo portant des numéros de série de trame en utilisant un procédé de codage vidéo prédéfini conformément à un paramètre de qualité désigné ; et
envoyer (S33) les trames vidéo portant les numéros de série de trame au terminal.

3. Appareil de réglage de qualité vidéo basé sur un environnement réseau, comprenant :
un premier module de détermination, configuré pour déterminer si une trame vidéo est une trame clé ;
un module d'exécution, configuré pour : lorsque la trame vidéo est la trame clé, diviser la trame clé en une pluralité de trames divisées portant des en-têtes de données conformément à un critère de division prédéterminé, l'en-tête de données comprenant un numéro de série de trame de la trame clé, un numéro de série de trame divisée de la trame divisée, et le nombre total de la pluralité de trames divisées, où un numéro de série de trame cible comprend le numéro de série de trame et le numéro de série de trame cible ; et envoyer séquentiellement la pluralité de trames divisées portant des en-têtes de données au terminal ; et lorsque la trame vidéo n'est pas la trame clé, envoyer la trame vidéo portant un numéro de série de trame au terminal ;
un premier module de réception (61), configuré pour recevoir un numéro de série de trame cible d'une trame divisée perdue d'un terminal, le numéro de série de trame cible ayant pour objet de distinguer de manière unique des trames divisées les unes des autres, et utiliser l'heure à laquelle le numéro de série de trame cible est reçu comme un timbre horaire du numéro de série de trame cible ;
un module de commande de retransmission, configuré pour : lorsque le numéro de série de trame cible comprend un numéro de série de trame et un numéro de série de trame divisée et que le nombre courant de temps de retransmission correspondant au numéro de série de trame cible est moindre qu'un seuil de retransmission, déterminer que l'appareil a perdu la trame divisée, et envoyer la trame vidéo portant le numéro de série de trame cible au terminal, et accumuler progressivement de un le nombre courant de temps de retransmission ; et lorsque le numéro de série de trame cible comprend le numéro de série de trame et le numéro de série de trame divisée et que le nombre courant de temps de retransmission correspondant au numéro de série de trame cible n'est pas moindre que le seuil de retransmission, exécuter un deuxième module de détermination (62) ;
le deuxième module de détermination (62) étant configuré pour déterminer le nombre de numéros de série de trame cible correspondant aux timbres horaires dans une période de temps prédéfinie ;
un module de réglage de qualité (63), configuré pour : abaisser un paramètre de qualité désigné conformément à un critère de configuration prédéfini lorsque le nombre de numéros de série de trame cible est plus grand qu'un premier seuil ; ou bien pour accroître le paramètre de qualité désigné conformément au critère de configuration prédéfini lorsque le nombre de numéros de série de trame cible est moindre qu'un deuxième seuil, le premier seuil étant plus grand que le deuxième seuil.

4. Appareil de réglage de qualité vidéo basé sur un environnement réseau selon la revendication 3, **caractérisé en ce que** l'appareil comprend en outre :
un module d'acquisition, configuré pour acquérir des données vidéo recueillies ;
un module de compression, configuré pour comprimer les données vidéo dans des trames vidéo portant des numéros de série de trame en utilisant un procédé de codage vidéo prédéfini conformément à un paramètre de qualité désigné ; et
un module d'envoi, configuré pour envoyer les trames vidéo portant les numéros de série de trame au terminal.

5. Appareil de réglage de qualité vidéo basé sur un environnement réseau, comprenant :
un processeur ; et
une mémoire pour stocker des instructions exécutables par le processeur ;
dans lequel le processeur est configuré pour :
déterminer si une trame vidéo est une trame clé ; et lorsque la trame vidéo est la trame clé, diviser la trame clé en une pluralité de trames divisées portant des en-têtes de données conformément à un critère de division prédéfini, l'en-tête de données comprenant un numéro de série de trame de la trame clé, un numéro de série de trame divisée de la trame divisée, et le nombre total de la pluralité de trames divisées, où le numéro de série de trame cible comprend le numéro de série de trame et le numéro de série de trame divisée, puis à envoyer séquentiellement la pluralité de trames divisées portant des en-têtes de données au terminal ; et lorsque la trame vidéo n'est pas la trame clé, envoyer la trame vidéo portant un numéro de série de trame au terminal ;
recevoir un numéro de série de trame cible d'une trame vidéo perdue d'un terminal, le numéro de série de trame cible ayant pour objet de distinguer de manière unique des trames vidéo les unes des autres, et utiliser l'heure à laquelle le numéro de série de trame cible est reçu comme un timbre horaire du numéro de série de trame cible ;
déterminer, lorsque le numéro de série de trame cible comprend un numéro de série de trame et un numéro de série de trame divisée et qu'un nombre courant de temps de retransmission correspondant au numéro de série de trame cible est moindre qu'un seuil de retransmission, que le terminal a perdu la trame divisée ; envoyer la trame vidéo portant le numéro de série de trame cible au terminal ; et accumuler progressivement de un le nombre courant de temps de retransmission ;
déterminer, lorsque le numéro de série de trame cible comprend le numéro de série de trame et le numéro de série de trame divisée et que le nombre courant de temps de retransmission correspondant au numéro de série de trame cible n'est pas moindre que le seuil de retransmission, le nombre de numéros de série de trame cible correspondant aux timbres horaires dans une période de temps prédéfinie ; et
abaisser un paramètre de qualité désigné conformément à un critère de configuration prédéfini lorsque le nombre de numéros de série de trame cible est plus grand qu'un premier seuil ; ou bien
accroître le paramètre de qualité désigné conformément au critère de configuration prédéfini lorsque le nombre de numéros de série de trame cible est moindre qu'un deuxième seuil, le premier seuil étant plus grand que le deuxième seuil.

6. Programme informatique qui, lorsque exécuté sur un processeur d'un appareil, met en oeuvre un procédé selon l'une quelconque des revendications 1 ou 2.
